Europäisches Patentamt

European Patent Office

Office européen des brevets

(19)

(11) Veröffentlichungsnummer: **0 173 910 B1**

# EUROPÄISCHE PATENTSCHRIFT

(12)

(45) Veröffentlichungstag der Patentschrift: 24.07.91

(21) Anmeldenummer: 85110420.8

(22) Anmeldetag: 20.08.85

(51) Int. Cl.⁵: **H01F 1/11**, G11B 5/706, C01G 49/02

Die Akte enthält technische Angaben, die nach dem Eingang der Anmeldung eingereicht wurden und die nicht in dieser Patentschrift enthalten sind.

(54) **Höherkoerzitive isometrische Eisenoxide, Verfahren zu ihrer Herstellung sowie deren Verwendung.**

(30) Priorität: 01.09.84 DE 3432224

(43) Veröffentlichungstag der Anmeldung: 12.03.86 Patentblatt 86/11

(45) Bekanntmachung des Hinweises auf die Patenterteilung: 24.07.91 Patentblatt 91/30

(84) Benannte Vertragsstaaten: CH DE FR GB IT LI NL

(56) Entgegenhaltungen:
US-A- 2 694 656
US-A- 4 108 787

(73) Patentinhaber: **BAYER AG**

**W-5090 Leverkusen 1 Bayerwerk(DE)**

(72) Erfinder: **Wiese, Jürgen, Dr.**
**Husarenallee 1**
**W-4150 Krefeld(DE)**
Erfinder: **Buxbaum, Gunter, Dr.**
**Holzapfelweg 2**
**W-4150 Krefeld(DE)**
Erfinder: **Schäfer, Rolf, Dr.**
**Deswatinerstrasse 72**
**W-4150 Krefeld(DE)**
Erfinder: **Rodi, Fritz, Dr.**
**Schwarzer Weg 41**
**W-4130 Moers(DE)**

EP 0 173 910 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Anmeldung betrifft ein Verfahren zur Herstellung höherkoerzitiver isometrischer magnetischer Eisenoxidpigmente sowie gemäß diesem Verfahren hergestellte magnetische Eisenoxidpigmente und deren Verwendung.

Zur Herstellung von magnetischen Tonern für elektrostatische Fotokopienverfahren bzw. Magnetdrucker werden magnetische Eisenoxidpigmente der Zusammensetzung $FeO_x$, wobei $1,33 \leq x \leq 1,5$ ist, verwendet. Dafür kommen bei herkömmlichen Verfahren überwiegend isometrische Magnetit-Pigmente mit Koerzitivfeldstärken (IHc) von ca. 6,37-10,35 kA/m zum Einsatz. Bei modernen Einkomponenten-Tonern werden jedoch höhere Anforderungen an die Pigmente gestellt. So sollen deren Koerzitivfeldstärken im Bereich von 14,32-19,9 kA/m oder darüber liegen.

Es sind im wesentlichen zwei Verfahren bekannt, die geforderten Koerzitivkräfte zu erreichen:

1. durch den Einbau von Kobalt in die Eisenoxidpigmente,
2. durch die Verwendung nadelförmiger Pigmente.

Der Einbau von Kobalt ist jedoch teurer und bewirkt zusätzlich einen unerwünschten Abfall der IHc-Werte mit steigender Temperatur. Nadelförmige Pigmente bewirken Richtungsabhängigkeiten im Toner und rheologische Probleme bei dessen Herstellung, so daß ein Einsatz ebenfalls Nachteile mit sich bringt.

Weiterhin wurden für Einkomponenten Toner bereits höherkoerzitive $Fe_3O_4$-Pigmente vorgeschlagen (DE-A 3 513 788), die über ein Salzschmelz-Verfahren bei 700 - 1300°C gewonnen werden. Salzschmelz-Verfahren bringen jedoch Korrosions- und Abwasserprobleme mit sich und haben daher in der chemischen Technik kaum Eingang gefunden.

Es stellte sich daher die Aufgabe, ein einfaches, preiswertes Verfahren zur Herstellung isometrischer magnetischer Eisenoxidpigmente für den Einsatz in Tonern zu finden, welches die Nachteile der Verfahren des Standes nicht aufweist.

In einem nassen Verfahren hergestellte isometrische Pigmente sind solche, die über das Nitrobenzolredutionsverfahren (DE-C 46 37 73) oder über ein Fällungsverfahren aus Eisensalzen und Alkalien (DE-A 2 612 798) oder über ein Penniman-Verfahren in Gegenwart von Fe-Schrott (DE-A 2 617 569) oder andere in der Literatur bekannte Verfahren aus wäßrigem Millieu hergestellt werden. Die üblicherweise nach diesem Verfahren erreichbaren IHc-Werte sind auf ca. 12 kA/m begrenzt, wie sie die im Handel verfügbaren Produkte zeigen.

Überraschenderweise wurde nun gefunden, daß die Koerzitivfeldstärke von auf einem nassen Verfahren hergestellten isometrischen magnetischen Eisenoxidpigmenten drastisch angehoben werden können, wenn diese einer kombinierten Oxidations- und Temperaturbehandlung und anschließender Rückumwandlung in $Fe_3O_4$-Pigmente unterworfen werden.

Gegenstand der Erfindung ist somit ein Verfahren zur Herstellung höherkoerzitiver isometrischer magnetischer Eisenoxidpigmente, das dadurch gekennzeichnet ist, daß

a) in einem nassen Verfahren hergestellte isometrische $Fe_3O_4$-Pigmente zu $Fe_2O_3$ oxidiert und

b) anschließend zu höherkoerzitiven $Fe_3O_4$-Pigmenten reduziert werden.

Die so erhaltenen höherkoerzitiven $Fe_3O_4$-Pigmente können in einen weiteren Schritt

c) zu ihrerseits höherkoerzitiven $\gamma$-$Fe_2O_3$-Pigmenten oder bertholloiden Mischpasen-Pigmenten oxidiert werden.

Der Teilschritt la kann mit gasförmigem Oxidationsmittel wie etwa Luft bei Temperaturen zwischen 200°C und 950°C durchgeführt werden. Bevorzugt ist der Bereich zwischen 400°C und 950°C.

Die Reduktion gemäß Teilschritt b geschieht mit einem reduzierenden Gas bei Temperaturen zwischen 200 und 700°C, bevorzugt 300 - 500°C. Als reduzierendes Gas können dabei gasförmige organische Verbindungen wie Erdgas oder Kohlenmonoxid oder bevorzugterweise Wasserstoff verwendet werden. Zur Vermeidung einer Überreduktion kann der Wasserstoff befeuchtet werden.

Die so erhaltenen $Fe_3O_4$-Pigmente können bei 100°C - 600°C, bevorzugt zwischen 200°C und 400°C, zu $\gamma$-$Fe_2O_3$ oder einer bertholloiden Mischphase oxidiert werden.

Die erfindungsgemäß erhaltenen magnetischen $Fe_3O_4$-Pigmente eignen sich hervorragend zur Herstellung schwarzer Toner oder schwarzer magnetischer Druckfarben. Die zu $\gamma$-$Fe_2O_3$ oxidierten Pigmente sind vorteilhaft zur Herstellung gefärbter Toner einzusetzen. In den nachfolgenden Beispielen soll die Erfindung verdeutlicht werden ohne sie jedoch zu beschränken. Die maximale Meßfeldstärke bei der Bestimmung der magnetischen Daten beträgt 4 T.

**Beispiel 1**

Nasses Herstellverfahren nach dem Nitrobenzolreduktionsverfahren

Gemäß DE-C 463 773 wird ein $Fe_3O_4$-Pigment hergestellt, daß durch folgende Kenngrößen charakterisiert wird: Durchschnittliche Teilchengröße = 0,5 $\mu$m, $I^Hc$ = 11,14 kA/m $M_s$ = 5 T und unter der Bezeichnung Bayferrox 8610 im Handel erhältlich ist (BAYER AG) und in Tonern Verwendung findet.

Schritt a

In einem Labordrehofen wurde dieses Produkt 30 Minuten bei 700°C unter Luft oxidiert.

Schritt b

120 Minuten bei 400°C wurde mit bei 60°C befeuchtetem Wasserstoff zum schwarzen $Fe_3O_4$-Pigment reduziert
Folgende Magnetwerte wurden bestimmt:
$^IH_C$ = 22,68 kA/m
$M_s$ = 4,875 T
durchschnittliche Teilchengröße 0,5 $\mu$m
spez. Oberfläche nach BET = 4 m²/g

Beispiel 2

Das Produkt aus Beispiel 1 wurde bei 280°C in 120 Minuten unter Luft zu braunem $\gamma$-$Fe_2O_3$-Pigment oxidiert.
Folgende Magnetwerte wurden bestimmt:
$^IH_C$ = 14,17 kA/m
$M_s$ = 3,815 T
spezifische Oberfläche = 3,3 m²/g
durchschnittliche Teilchengröße 0,5 $\mu$m.

Beispiel 3 (Vergleichsbeispiel)

Die Magnetwerte des Ausgangsmaterials für Beispiel 1 und 2 wurden ermittelt. Der Magnetit Bayferrox 8610 weist folgende Daten auf:
IHc = 10,5 kA/m
Ms = 4,9 T

Beispiel 4 (Vergleichsbeispiel)

Bayferrox 8610 wurde bei 250°C 120 Minuten lang oxidiert. Das erhaltene gamma-Eisenoxid hat die magnetischen Werte:
IHc = 6,92 kA/m
Ms = 4,15 T

## Patentansprüche

1. Verfahren zur Herstellung höherkoerzitiver isometrischer magnetischer Eisenoxidpigmente, dadurch gekennzeichnet, daß
   a) in einem nassen Verfahren hergestellte isometrische $Fe_3O_4$-Pigmente bis zum $Fe_2O_3$ oxidiert und
   b) anschließend zu höherkoerzitiven $Fe_3O_4$-Pigmenten reduziert werden.

2. Verfahren gemäß Anspruch 1, dadurch gekennzeichnet, daß die höherkoerzitiven $Fe_3O_4$-Pigmente in einem weiteren Schritt
   c) zu höherkoerzitiven $\gamma$-$Fe_2O_3$-Pigmenten

oder bertholoiden Mischphasen-Pigmenten oxidiert werden.

3. Verfahren gemäß einem der Ansprüche 1 oder 2, dadurch gekennzeichnet, daß die Oxidation gemäß dem Teilchschritt 1a mit Luft bei Temperaturen zwischen 200 und 950°C, bevorzugt zwischen 400 und 900°C, durchgeführt wird.

4. Verfahren gemäß einem der Ansprüche 1 bis 3, dadurch gekennzeichnet, daß die Reduktion gemäß Teilchschritt 1b mit einem reduzierenden Gas bei Temperaturen zwischen 200 und 700°C, bevorzugt 300 bis 500°C, durchgeführt wird.

5. Verfahren gemäß Anspruch 4, dadurch gekennzeichnet, daß das reduzierende Gas Wasserstoff, gegebenenfalls feuchter Wasserstoff ist.

6. Verfahren gemäß einem der Ansprüche 2 bis 5, dadurch gekennzeichnet, daß die Oxidation gemäß dem Teilchschritt 2c, mit Luft bei Temperaturen zwischen 100°C und 600°C, bevorzugt zwischen 200°C und 400°C durchgeführt wird.

7. Verwendung der magnetischen Eisenoxidpigmente gemäß einem der Ansprüche 1 bis 6 als magnetische Komponente in Tonern für Magnetdrucker und elektrostatische Fotokopiersysteme.

## Claims

1. A process for the production of isometric magnetic iron oxide pigments of relatively high coercivity characterized in that
   a) isometric $Fe_3O_4$ pigments produced in a wet process are oxidized to $Fe_2O_3$ and
   b) are subsequently reduced to $Fe_3O_4$ pigments of relatively high coercivity.

2. A process as claimed in claim 1, characterized in that, in another step, the $Fe_3O_4$ pigments are
   c) oxidized to $\gamma$-$Fe_2O_3$ pigments or bertholoid mixed-phase pigments of relatively high coercivity.

3. A process as claimed in claim 1 or 2, characterized in that the oxidation step 1a is carried out with air at temperatures of 200 to 950°C and preferably at temperatures of 400 to 900°C.

4. A process as claimed in any of claims 1 to 3, characterized in that the reduction step 1b is carried out with a reducing gas at temperatures of 200 to 700°C and preferably at temperatures of 300 to 500°C.

5. A process as claimed in claim 4, characterized in that the reducing gas is hydrogen, optionally moist hydrogen.

6. A process as claimed in any of claims 2 to 5, characterized in that the oxidation step 2c is carried out with air at temperatures of between 100°C and 600°C, preferably between 200°C and 400°C.

7. Use of the magnetic iron oxide pigments according to any of claims 1 to 6 as the magnetic component in toners for magnetic printers and electrostatic photocopying systems.

**Revendications**

1. Procédé de fabrication de pigments d'oxyde de fer magnétiques, isométriques, à coercitivité supérieure, caractérisé en ce que :
   a) des pigments de $Fe_3O_4$ isométriques fabriqués par un procédé par voie humide sont oxydés en $Fe_2O_3$ et
   b) sont ensuite réduits en pigments de $Fe_3O_4$ à coercitivité supérieure.

2. Procédé selon la revendication 1, caractérisé en ce que les pigments de $Fe_3O_4$ à coercitivité supérieure sont oxydés dans une étape suivante :
   c) en pigments de $Fe_2O_3$-$\gamma$ ou en pigments en phases mixtes bertholloïdes à coercitivité supérieure.

3. Procédé selon l'une des revendications 1 ou 2, caractérisé en ce que l'oxydation selon l'étape partielle 1a est effectuée à l'air à des températures comprises entre 200 et 950°C, de préférence entre 400 et 900°C.

4. Procédé selon l'une des revendications 1 à 3, caractérisé en ce que la réduction selon l'étape partielle 1b est réalisée avec un gaz réducteur à des températures comprises entre 200 et 700°C, de préférence entre 300 et 500°C.

5. Procédé selon la revendication 4, caractérisé en ce que le gaz réducteur est de l'hydrogène, éventuellement de l'hydrogène humide.

6. Procédé selon l'une des revendications 2 à 5, caractérisé en ce que l'oxydation selon l'étape partielle 2c est réalisée avec de l'air à des températures comprises entre 100°C et 600°C, de préférence entre 200°C et 400°C.

7. Utilisation des pigments d'oxyde de fer magnétiques selon l'une des revendications 1 à 6 comme constituants magnétiques de toners pour imprimantes magnétiques et systèmes de photocopie électrostatiques.